# EUROPEAN PATENT APPLICATION

(11) **EP 4 750 104 A1**
(43) Date of publication of application: **27.05.2026**
(21) Application number: 24306970.5
(22) Date of filing: 25.11.2024
(51) Int. Cl.: H04W 8/20

(54) **METHOD OF PROVISIONING ESIM PROFILES**

(71) Applicant: IDEMIA France, 92400 Courbevoie (FR)
(72) Inventor: KARPINSKI, Pawel, 92400 COURBEVOIE (FR)
(74) Representative: Regimbeau

(57) **Abstract**

Method of provisioning embedded Subscriber Identity Module, eSIM, profiles. The method comprises the following steps carried out at a subscription managing server: sending (102) an eSIM profile to a first embedded Universal Integrated Circuit Card, eUICC, for installing the eSIM profile in the first eUICC; sending (106) a request to an over-the-air, OTA, update server; receiving (108) from the OTA update server a response to the request, the response comprising an update sent by the OTA update server to the eUICC for updating the eSIM profile in the eUICC; generating (110) an updated eSIM profile from the eSIM profile and the update; and sending (112) the updated eSIM profile to a second eUICC for installing the updated eSIM profile in the second eUICC.

## Description

### TECHNICAL FIELD

This disclosure relates to a method of provisioning embedded Subscriber Identity Module (eSIM) profiles.

### BACKGROUND

An embedded Universal Integrated Circuit Card (eUICC) is a programmable SIM card that is soldered directly onto a device's motherboard, eliminating the need for a physical SIM card slot. The eUICC is designed to securely store multiple electronic Subscriber Identity Modules (eSIMs), which are profiles containing the unique identifiers and cryptographic keys used by cellular network service providers to authenticate and connect devices to their networks.

According to a known method, a subscription managing server sends a eSIM profile to an eUICC for installing the eSIM profile in the eUICC. After its installation the eSIM profile may need to be updated and changes may occur over time, due to, for example, the addition of new functionalities into and/or supplied by the profile, modification of security's aspects, modifications of profile's configuration. Updates are provided by an over-the-air, OTA, update server, which is distinct from the subscription managing server.

Later on, a reinstallation of the eSIM profile (in the same eUICC or in another eUICC) may have to be performed and imply, once again, a new download of the eSIM profile. In addition, the downloading of an eSIM profile generated without all or part of any required updates, to make the profile fully operational, may lead a dysfunctional behavior. The steps described above are repeated: the subscription managing server provides the eSIM profile and the OTA update server reapplies the same updates. However, this is time consuming and not efficient because the subscription managing server and the OTA update server work in parallel without synchronization between them.

### SUMMARY

A technical problem to be solved is downloading and/or reinstalling an eSIM profile in a more efficient manner.

This technical problem is solved by a method of provisioning embedded Subscriber Identity Module, eSIM, profiles according to claim 1. The method comprises the following steps carried out at a subscription managing server: sending an eSIM profile to a first embedded Universal Integrated Circuit Card, eUICC, for installing the eSIM profile in the first eUICC; sending a request to an over-the-air, OTA, update server; receiving from the OTA update server a response to the request, the response comprising an update sent by the OTA update server to the eUICC for updating the eSIM profile in the eUICC; generating an updated eSIM profile from the eSIM profile and the update; and sending the updated eSIM profile to a second eUICC for installing the updated eSIM profile in the second eUICC.

Optional but advantageous features of the method are recited in the dependent claims.

Preferably, the response comprises all updates sent to the first eUICC for updating the eSIM profile since an installation of the eSIM profile in the first eUICC, and the updated eSIM profile is generated from the eSIM profile and all the updates.

Preferably, the updated eSIM profile comprises an installation applet configured to, when executed by an operating system of the second eUICC, generate from the or each update data interpretable by the operating system.

Preferably, the updated eSIM profile comprises at least one profile element generated from the or each update, the profile element being interpretable by an operating system of the second eUICC.

Preferably, the subscription managing server is a SM-DP server or SM-DP+ server.

The second eUICC may be the first eUICC or another eUICC.

A computer program product comprises code instructions for causing a subscription managing server to perform the above-mentioned method.

Besides, a subscription managing server comprises a network interface for: sending an embedded Subscriber Identity Module, eSIM, profile to an embedded Universal Integrated Circuit Card, eUICC for installing the eSIM profile in the eUICC, sending a request to an over-the-air, OTA, update server, and in response to the request, receiving from the OTA update server an update sent by the OTA update server to the eUICC for updating the eSIM profile in the eUICC. The subscription managing server further comprises at least one processor configured to generate an updated eSIM profile from the eSIM profile and the update and cause the network interface to send the updated eSIM profile to a second eUICC for installing the updated eSIM profile in the second eUICC.

The subscription managing server may be of the SM-DP or SM-DP+ type.

Besides, a system comprises the subscription managing server and an OTA update server configured to send the update to the eUICC for updating the eSIM profile in the eUICC, receive the request from the subscription managing server, and send to subscription managing server a response to the request, the response comprising the update.

The system may further comprise an embedded Universal Integrated Circuit Card, eUICC configured to receive the updated eSIM profile from the subscription managing server and install the updated eSIM profile.

### BRIEF DESCRIPTION OF THE FIGURES

Further details, features and advantages are explained in more detail below with the aid of exemplary embodiments that are illustrated in the figures.
Figure 1 schematically depicts a system including servers and an eUICC.
Figure 2 shows steps of a method carried out by the system of figure 1.

### DETAILED DESCRIPTION OF EMBODIMENTS

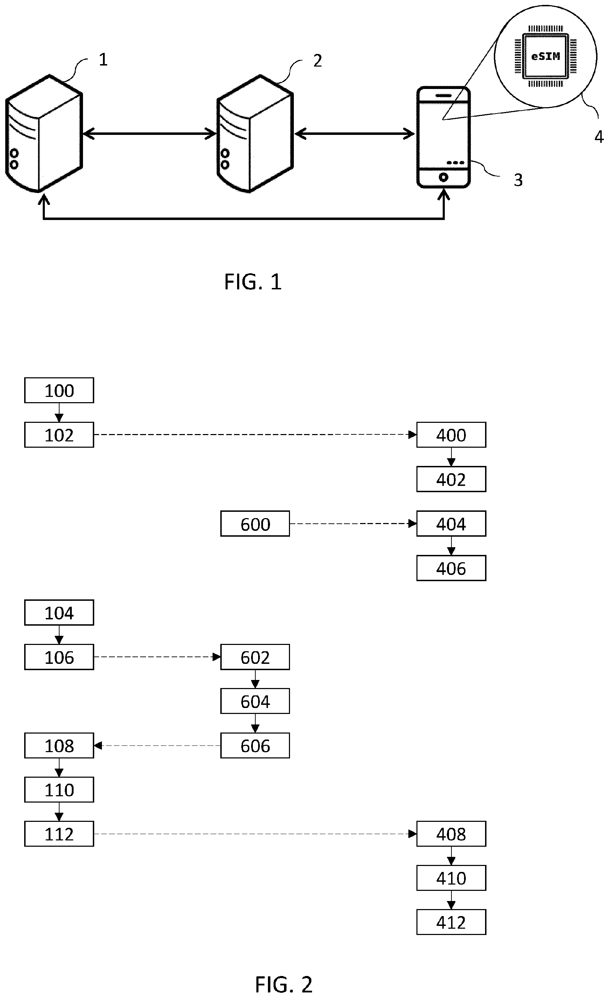

Referring to figure 1, a system comprises a subscription managing server 1, an over-the-air (OTA) update server 2, a mobile device 3 and a Universal Integrated Circuit Card (eUICC) 4.

The subscription managing server 1 comprises a network interface for communicating with the mobile device 3 and with the OTA update server 2. A role played by the subscription managing server 1 is provisioning eSIM profiles. In particular, the subscription managing server 1 is configured to send eSIM profiles to the mobile device 3 to be installed in the eUICC 4.

The subscription managing server 1 comprises (or has access to) a memory for storing eSIM profiles, and at least one processor for implementing steps which will be described hereinafter. The memory of server 1 may further store code instructions for causing the server 1 to perform these steps, whenever the code instructions are executed by the or each processor.

The subscription managing server 1 may be a SM-DP server or a SM-DP+ server (SM-DP stands for Subscription Manager Data Preparation and "+" means enhanced). A SM-DP server is more focused on M2M applications with separate components for data preparation (SM-DP) and secure routing (SM-SR, stands for Subscription Manager-Secure Routing). An SM-DP+ server integrates the functionalities of both SM-DP and SM-SR to cater to consumer devices, offering a more seamless and efficient eSIM management process.

The OTA update server 2 comprises a network interface for communicating with the mobile device 3 and with the subscription managing server 1. A role played by the OTA update server 2 is provisioning updates to eSIM profiles. In particular, the OTA update server 2 is able to send updates to the mobile device 3 to be installed in the eUICC 4. Servers 1, 2 are distinct.

The OTA update server 2 further comprises a memory for storing updates, and at least one processor for implementing steps which will be described hereinafter. The memory may further store code instructions for causing the server 2 to perform these steps, whenever the code instructions are executed by the or each processor.

The mobile device 3 comprises a cellular network interface able to connect to cellular networks (3G, 4G, 5G and so on). The cellular network interface comprises at least one antenna.

The mobile device 3 is for example a smartphone, a tablet or a laptop having cellular connectivity.

The mobile device 3 further includes the eUICC 4.

The eUICC 4 comprises a memory for storing software code and eSIM profiles, a processor to execute the software code and a bus interface to communicate with other components of the mobile device 3, such as the cellular network interface of the mobile device 3.

The software code comprises an operating system able to be run by the processor.

The memory of the eUICC 4 can store and manage multiple eSIM profiles, allowing a user of the mobile device 3 to connect and switch between different network providers without physically changing eUICC 4. eSIM profiles can be downloaded and activated over-the-air (OTA), enabling seamless updates and changes to the device's network configuration.

The eUICC 4 adheres to the architectural standards set by the GSM Association (GSMA), such as « GSMA SGP.02 Remote Provisioning Architecture for Embedded UICC Technical Specification » in version 4.3, 25th January 2023 (referred as to « GSMA SGP.02 » into the following text), or « GSMA SGP.22 RSP Technical Specification » in version 3.1 Final, 01 December 2023 (referred as to «GSMA SGP.22 » in the rest of the document) or « GSMA SGP.32 eSIM IoT Technical Specification, Version 1.0.1, 04 July 2023 » (referred as « GSMA SGP.32 » into the following) ensuring compatibility with a wide range of mobile device 3s and network operators.

Referring to figure 2, a method implemented by the system comprises steps which are described below.

At step 100, the subscription managing server 1 generates an eSIM profile for the eUICC 4. The eSIM profile has a format which is known. This format has been described in GSMA SGP.02, GSMA SGP.22, GSMA SGP.32 or either into the standard Trusted Connectivity Alliance entitled « eUICC Profile Package: Interoperable Format Test Specification », for example in its version 3.2.1 published on december 2022 (referred as to « TCA » in the following).

At step 102, the subscription managing server 1 sends the eSIM profile to the eUICC 4. For that purpose, a communication channel has been established between the subscription managing server 1 and the mobile device 3 incorporating the eUICC 4.

At step 400, the eUICC 4 receives the eSIM profile.

At step 402, the operating system of the eUICC 4 installs the eSIM profile in the memory thereof. This step is known per se. Once the eSIM profile is installed and after being enabled, this profile can be used by the mobile device 3 to connect to specific networks indicated in and related to the profile.

After the eSIM profile is installed and enabled, this eSIM profile needs to be updated.

At step 600, the OTA update server 2 sends an update for the eSIM profile to the eUICC 4. Step 600 is performed during an update procedure which is known per se. This procedure implies the establishment of a communication channel between the OTA update server 2 and the mobile device 3.

The update has a format which is known. This format has been described in ... standards such as "GlobalPlatform Technology - Remote Application Management over HTTP - Card Specification v2.3 - Amendment B - GPC_SPE_011" in version 1.2 published on March 2022, or in "ETSI TS 102 226 - Smart Cards; Remote APDU structure for UICC based applications (Release 18)" in version 18.3.0, July 2024, or in "ETSI TS 102 225 - Smart Cards; Secured packet structure for UICC based applications (Release 18)"in version 18.1.0, July 2024, or in "GlobalPlatform Device - Secure Element Remote Application Management - GPD_SPE_008" in version 1.0.1, November 2015.

At step 404, the eUICC 4 receives the update, which is then stored in step 406 in the memory of the eUICC 4.

Steps 600, 404, 406 may be repeated over time to update the eSIM profile stored in the eUICC 4.

It is to be noted that the OTA update server 2 keeps in memory a copy of all updates sent to the eUICC 4 at any occurrence of step 600.

Later, the subscription managing server 1 detects that the eSIM profile which was sent before at step 102 needs to be installed in a second eUICC. For instance, the second eUICC sends a request for that purpose to the subscription managing server 1.

In fact, the second eUICC may be the eUICC 4 in which the eSIM profile was installed before (in this case, the eSIM profile has to be reinstalled) or may be a different eUICC (in which the eSIM profile has not been installed yet). In the following, it will be assumed that the second eUICC is the eUICC 4 for the sake of simplicity, but this is a non-limiting embodiment.

At step 104, the subscription managing server 1 generates a request for past updates of the eSIM profile. The request may for instance include a unique identifier of the eSIM profile which was generated before at step 100. In another embodiment, the request may include for instance in addition to the unique identifier of the eSIM profile, a unique identifier of the eUICC 4.

At step 106, the subscription managing server 1 sends the request to the OTA update server 2.

At step 602, the OTA update server 2 receives the request.

Upon receiving the request, the OTA update server 2 determines in its memory at least one update which was previously sent by the OTA update server 2 to the eUICC 4 for updating the eSIM profile (step 604). At step 604, the OTA update server 2 may browse a database stored in its memory, wherein eSIM profiles are associated with respective past updates.

Advantageously, the OTA update server 2 determines in its memory all updates which were previously sent by the OTA update server 2 to the eUICC 4 for updating the eSIM profile at step 604. The number of updates may be zero, one, or more than one.

At step 606, the OTA update server 2 sends a response to the subscription managing server 1. The response contains the or each update found at step 204.

At step 108, the subscription managing server 1 receives the response.

At step 110, the subscription managing server 1 generates an updated eSIM profile from the eSIM profile which was generated at step 100 and each update contained in the response.

The updated eSIM profile may have different forms.

The updated eSIM profile may be a mere juxtaposition the eSIM profile and each update. Alternatively, the contents of the eSIM profile may be modified using each update, and the updated eSIM profile may result from this modification.

At step 112, the subscription managing server 1 sends the updated eSIM profile to the eUICC 4. This step 112 is similar to step 102.

At step 408, the eUICC 4 receives the updated eSIM profile.

At step 410, the eUICC 4 installs the updated eSIM profile. This step may include installing first the eSIM profile (step 410) and installing all updates in separate steps (step 412).

In an embodiment, the updated eSIM profile comprises an installation applet configured to, when executed by the operating system of the eUICC 4, generate data interpretable by the operating system from the or each update. In this embodiment, step 412 comprises an execution of the installation applet by the operating system of the eUICC 4.

In another embodiment, the updated eSIM profile comprises at least one Profile Element generated from the or each update, the profile element being interpretable by an operating system of the eUICC 4. The structure of a Profile Element has been described in TCA as previously referred in the text. In this embodiment, no applet is necessary, since the or each profile element can be directly interpreted by the operating system at step 410 but still be installed at step 412.

## Claims

1. Method of provisioning embedded Subscriber Identity Module, eSIM, profiles, the method comprising the following steps carried out at a subscription managing server:
• sending (102) an eSIM profile to a first embedded Universal Integrated Circuit Card, eUICC, for installing the eSIM profile in the first eUICC;
• sending (106) a request to an over-the-air, OTA, update server;
• receiving (108) from the OTA update server a response to the request, the response comprising an update sent by the OTA update server to the eUICC for updating the eSIM profile in the eUICC;
• generating (110) an updated eSIM profile from the eSIM profile and the update;
• sending (112) the updated eSIM profile to a second eUICC for installing the updated eSIM profile in the second eUICC.

2. Method of the preceding claim, wherein:
• the response comprises all updates sent to the first eUICC for updating the eSIM profile since an installation of the eSIM profile in the first eUICC, and
• the updated eSIM profile is generated from the eSIM profile and all the updates.

3. Method of any of the preceding claims, wherein the updated eSIM profile comprises an installation applet configured to, when executed by an operating system of the second eUICC, generate data interpretable by the operating system from the or each update.

4. Method of any of the preceding claims, wherein the updated eSIM profile comprises at least one profile element generated from the or each update, the profile element being interpretable by an operating system of the second eUICC.

5. Method of any of the preceding claims, wherein the subscription managing server is a SM-DP server or SM-DP+ server.

6. Method of any of the preceding claims, wherein the second eUICC is the first eUICC.

7. Computer program product comprising code instructions for causing a subscription managing server to perform the method of any of the preceding claims.

8. Subscription managing server (1) comprising:
• a network interface for:
• sending an embedded Subscriber Identity Module, eSIM, profile to an embedded Universal Integrated Circuit Card, eUICC (4) for installing the eSIM profile in the eUICC (4),
• sending a request to an over-the-air, OTA, update server (2),
• in response to the request, receiving from the OTA update server (2) an update sent by the OTA update server 2 to the eUICC (4) for updating the eSIM profile in the eUICC (4); and
• at least one processor configured to:
• generate an updated eSIM profile from the eSIM profile and the update,
• cause the network interface to send the updated eSIM profile to a second eUICC (4) for installing the updated eSIM profile in the second eUICC (4).

9. Subscription managing server of the preceding claim, wherein the subscription managing server is of the SM-DP or SM-DP+ type.

10. System comprising:
• a subscription managing server (1) as claimed in any of claims 8 and 9,
• an OTA update server (2) configured to
• send the update to the eUICC (4) for updating the eSIM profile in the eUICC (4),
• receive the request from the subscription managing server (1),
• send to subscription managing server (1) a response to the request, the response comprising the update.

11. System according to the preceding claim, further comprising:
• an embedded Universal Integrated Circuit Card, eUICC (4) configured to:
• receive the updated eSIM profile from the subscription managing server (1),
• install the updated eSIM profile.
